# EUROPEAN PATENT SPECIFICATION

(11) **EP 1 366 287 B1**
(45) Date of publication and mention of the grant of the patent: **06.12.2006**
(21) Application number: 02711575.7
(22) Date of filing: 12.02.2002
(51) Int. Cl.: F03B 13/12, F03B 17/06

(54) **APPARATUS FOR PRODUCTION OF ENERGY FROM CURRENTS IN BODIES OF WATER, A FOUNDATION, AND A METHOD FOR THE INSTALLATION OF THE APPARATUS.**
VORRICHTUNG ZUR ERZEUGUNG VON ENERGIE AUS STRÖMUNGEN IN GEWÄSSERN, FUNDAMENT UND VERFAHREN ZUR INSTALLATION DER VORRICHTUNG
APPAREIL DESTINE A LA PRODUCTION D'ENERGIE A PARTIR DE COURANTS DANS L'EAU EN ECOULEMENT ET PROCEDE D'INSTALLATION DE L'APPAREIL

(30) Priority: 13.02.2001 NO 20010737
(43) Date of publication of application: 03.12.2003
(73) Proprietor: Hammerfest Ström AS, 9613 Hammerfest (NO)
(72) Inventor: JOHANSEN, Harald, N-9600 Hammerfest (NO); BEKKEN, Björn, N-4013 Stavanger (NO)
(74) Representative: Bucks, Teresa Anne
(86) International application number: PCT/NO2002/000060
(87) International publication number: WO 2002/066828

(56) References cited:
- GB-A- 2 347 976
- GB-A- 2 348 250
- GB-A- 2 348 465

## Description

The invention concerns an apparatus for the production of electric energy from ocean- and river currents.

The apparatus is intended to transform the kinetic energy in water currents to electric energy by means of a rotating turbine. The apparatus (with the exception of a smaller land based installation for the connection to the existing power grid) is installed completely submerged in suitable tidal currents, river currents or ocean currents (eg GB-A-2348465).

Science and development of tidal water power plants for the production of electric energy has been proceeding for many decades. The advantages of tidal water plants as compact to for instance windmills, is that they are predictable and not particularly depending on weather. Nevertheless very few plants have been built, even though it on a world basis is very large quantities of energy in tidal currents. The reason is mainly due to economical and/or environmental factors.

Most tidal water power plants that are built, planned built and/or expressed in the literature, are so-called barrier-power plants. They are based on collecting water in a fjord or a pool during high fide, to thereafter release the water at low tide. The water can be utilised both ways through one or several low-pressure turbines. Thereby the potential energy in the water can be utilised. Such projects are however expensive, and they have considerable consequences for the marine diversity, navigation and recreational activities in the area.

This has been attempt solved by placing turbines in freely flowing bodies of water. As an example, Marine Current Turbines Ltd., has suggested to place an axial turbine on a post or pillar secured to the seabed where the flowing body of water passes. These turbines are secured to pillars or posts that reaches above the surface of the flowing body of water.

However, the hydrodynamic forces causes considerable mechanical stresses on constructions of this type, and it is difficult to succeed in making a foundation on the seabed in a long lasting and economical way, particularly when the-conditions on the seabed are difficult. Bodies of water past through constructions of this type easily creates natural frequencies and oscillations in the construction, that in the end create fatigue fractures. Corrosion is also a problem, both in the splash zone in the transmission between water and air, and in places with large mechanical stresses. It will also be an advantage to simplify installation, maintenance and replacement of components. Furthermore, constructions of this type are an obstacle for navigation, and are otherwise unappealing in the environment.

Accordingly it is an object of the invention to provide a construction that is exposed for reduced mechanical and corrosive loads, that is not an obstacle for navigation, that is not unappealing in the environment, that can be found on a simple and economical way with various seabed conditions, and a method for the installation of the construction on the seabed. Furthermore it is an object with the invention to provide a construction that simplifies maintenance and exchange of components. Many of the objects of the invention is achieved by the fact that an installation according to the invention results in a reduced area the bodies of water acts on and thereby the mechanical loads.

This is achieved with the present invention as defined in the independent claims.

The apparatus according to the invention utilises the kinetic energy in the water in an otherwise known way.

The invention describes a turbine that can be compared with a windmill. The turbine may have two or several turbine blades with preferably an unsymmetrical profile that will induce a lift when bodies of water are flowing past it. The turbine is equipped with a mechanism for twisting the turbine blades. Such mechanisms are known from for instance windmills and driving propellers. Due to the asymmetrical profile, if the apparatus is to be used in tidal plants, the blades must be able to twist at least 180°, preferably at least 220°, in order to allow the current to be utilised optimally when the tidal current changing direction. In for instance river plants, this will not be necessary.

The turbine is a lift-induced propeller turbine where the pitch of the blades can be controlled to increase the efficiency and to be able to rotate the blades at least 180° preferably in connection with a change of the direction of the current. Thereby the construction can be secured in a locked position on a carrier structure (does not need to be rotated, as opposed to a windmill).

Furthermore the apparatus comprises a watertight capsule or housing with equipment for transforming the rotation of the turbine to electrical power, including a generator, possibly a transmission, control-system and secondary functions such as emptying devises for smaller leaks.

The housing comprises elements for supporting the turbine, and includes components for transferring the mechanical energy, preferably to electric energy. Such elements are normally well known and can comprise gears, a generator, a frequency converter and a transformer.

A variant of the power plant allows the turbine to propel a pump instead of an electrical generator. In this embodiment water is pumped through a water line to, at a high placed, pool on land, and the water can from there flow down and drive a turbine/generator of a lower level on land.

The unit should also include a unit for controlling the mechanism for the twisting of the controlling of the pitch of the turbine blades. This control can be connected to an apparatus for measuring the velocity and direction of the flowing current.

The housing is secured to the seabed with a foundation or a carrying construction. The carrying construction also includes a cable gate that the power cable is secured to, to avoid fatigue fractures due to the forces from the water current.
The foundation preferably includes a foundation pillar that is pressed into the seabed, a reinforcement tube with formwork that can be placed around the foundation and that can be filled with concrete, and a carrying pillar that carries the housing and that is secured to the foundation pillar for the foundation of the housing to the bottom.

To reduce the environmental loads, to allow navigation in the area, to reduce the mechanical loads on the construction and to reduce the interruption and the retarding forces on the body of water that can affect the turbine, the area and the extension of apparatus is reduced. This is done by only letting the apparatus extend from the seabed, where the apparatus is placed and founded, and up to the housing where the turbine is supported. The apparatus is in this way placed such that ships can pass above with a good margin.

The components are assembled as modules to ease installation and maintenance. During installation, the housing supporting the turbine will represent one module and the foundation one or several other modules. In one embodiment, the foundation includes the previously mentioned foundation pillar, the reinforcement tube with formwork, and a carrying pillar as separate modules.

A power cable for the generated power extend from the electrical generator, through the waterproof capsule and to a land based plant.

The advantages with the module assembly, are substantially lower costs of the plant, the possibility for stepwise development, and simplified decommissioning.

In a method for the installation of the apparatus according to the invention a stepwise installation is allowed, and installation is made feasible in spite of large forces imposed by the water current is made feasible.

In use the turbine is driven by the water current and is controlled as described below.

For water velocities that results in a production of electricity equal to or less than what the electrical components of the system are dimensioned for, the angle of attack of the turbine blades are adjusted to achieve an optimal efficiency.

For water velocities that result in a production of energy above what the electrical components of the system are dimensioned for, the angle of attack of the turbine blades are adjusted such that the production of electricity equals the capacity of the system.

For very high current velocities, it can be necessary to stop the turbine completely because of the mechanical forces imposed on the structure.

This control is very important to limit the requirements for the installed electric components and to reduce the dimensioning loads for the mechanical components. Thereby the costs of the plant can be reduced considerably without potential energy production being reduced accordingly. In connection with the change of the flowing water current, the turbine blades are twisted 180°. Thereby the turbine will also rotate in the opposite direction, something that is catered for by the power electronics of the system.

Repair and maintenance of the capsule and the components inside the capsule, is performed by raising the capsule to the surface such that the operations can be performed in a workshop.

Short description of the enclosed figures:
Fig. 1 shows an elevated view of one embodiment of the installation according to the invention;
Fig. 2 shows a partly cut through side elevation where a installation sequence is illustrated, from the left to right;
Fig. 3 shows three further steps of the installation sequence shown on figure 2;
Fig. 4 shows the last two steps of the sequence of the installation shown on figure 2 and figure 3;
Fig. 5 is a perspective view of a plant of several of the installations shown on figure 1;
Fig. 6 is partly cut through side elevation of a housing according to the invention;
Fig. 7 shows a side elevation of a housing during the assembly on a carrying pillar according to the invention;
Fig. 8 shows a partly cut through side elevation of a housing according to the invention, where internal components of the housing is shown;

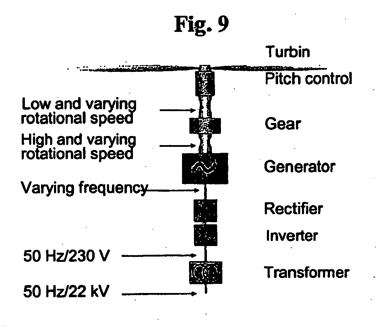

Fig. 9 is a schematic view of a power line, where the transition from mechanical energy to electric energy is described.

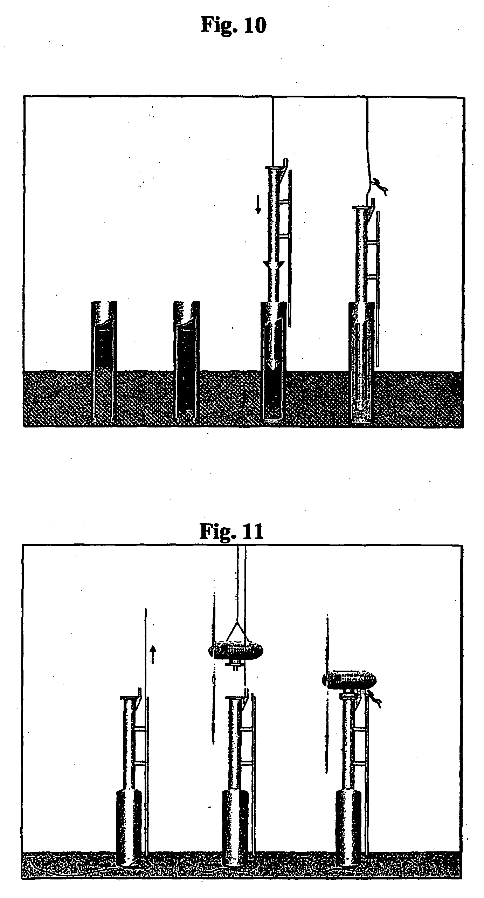

Fig. 10 and 11 shows an alternative embodiment of the installation shown on the figure 2 to 4.

In the following the invention will be described by means of an embodiment.

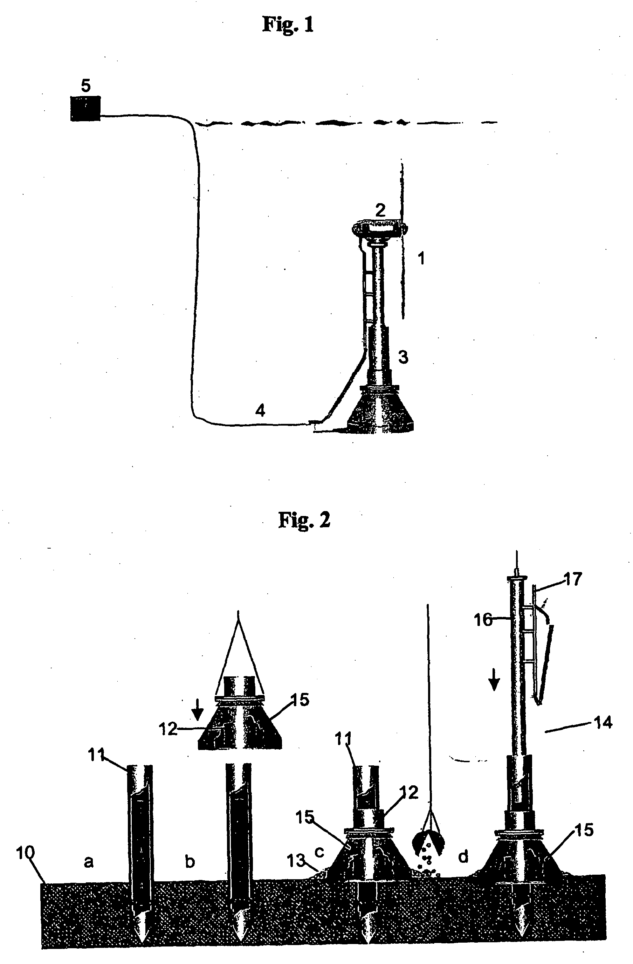

A lift induced propeller turbine (1), shown on figure 1, where the blades are controlled in pitch to increase the efficiency and to be able to rotate the blades at least 180°, preferably in connection with change of the direction of the current, is mounted to a watertight capsule or housing (2) with equipment to transform the rotation of the turbine to electric power, including a generator, and in some cases a gearing and control system. The housing (2) can also include secondary functions such as pump systems for pumping out water due to smaller leaks. By allowing the turbine blades to rotate as described, the shown construction can be installed in a locked position on the carrying construction (and does not need to be rotated, as opposed to a windmill).

A carrying construction, (3) carrying the turbine (1) and the capsule (2) can also include a cable gate that a cable for the transferral of power (4) is secured to, to avoid fatigue fractures due to the forces of the flowing currents. The energy transferring cable (4) from the generator extends from the electrical generator, through the watertight capsule and to a land based plant (5). The land based plant(5) transform the generated power before it is phased into an existing power grid.

The installation of the apparatus can be made stepwise in the steps (a) to (e), shown on the figures 2 to 4.

The steps (a), (b), (c) and (d) on figure 2 shows that the foundation pillar (11) first is driven down into the masses at the seabed. Outside this installation is a combined formwork and reinforcement tube (12). The formwork (15) (shown as a conical construction) can be of varies materials, including fabric that forms a conical shape when it is filled with concrete (later in the installation sequence). If the masses at the bottom (10) are unstable with respect to washing out, this can be remedied by placing a rock of gravel filling (13) around the edge of the formwork (15). The carrying construction or foundation (14) for the turbine (1) and the capsule (2) are installed inside the foundation pillar (11), but is pressed down into the seabed (10) and is oriented in relation to the direction of the flowing current.

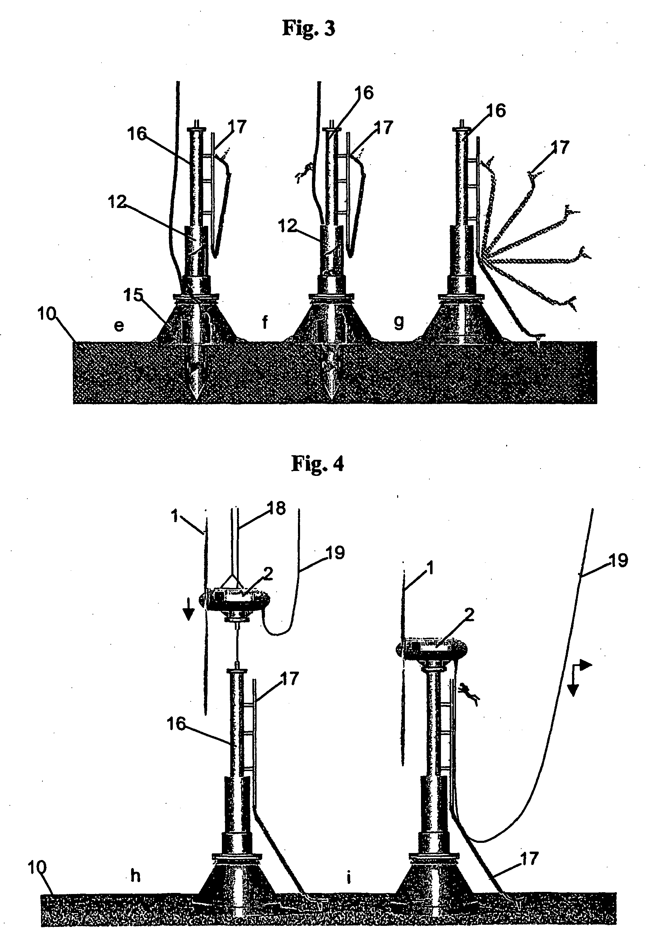

The steps (e), (f), and (g) on figure 3 show that cavities between the foundation pillar (11) and the reinforcement pillar (12) inside the formwork (15) and between the carrying pillar (16) and the reinforcement tube (12) is filled with concrete. Thereafter the hinged cable gate (17) is released such that the lower part rotates and falls down to the seabed(10).

The steps (h) and (i) on figure 4 shows that the turbine (1) and the capsule (2) is lowered from the surface and is guided in place by means of guiding lines (18) that extend from the top of the carrying construction and up to a vessel at the surface (not shown). After landing the turbine (1) and the capsule (2) on top of the carrying structure (14), the capsule is locked onto the carrying construction (14) mechanically. Finally the cable is lowered such that divers can secure it to the cable gate before the rest of the cable (19) is laid down on the seabed (10) and to the shore (not shown). The cable (19) is laid with a bow by the foot of the carrying structure (14) such that it is included sufficient length to raise the capsule (2) and the turbine (1) to the surface for later repair and maintenance.

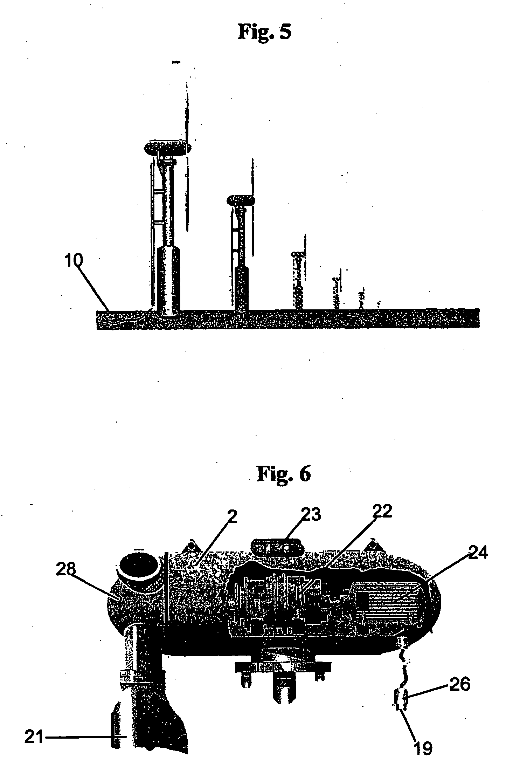

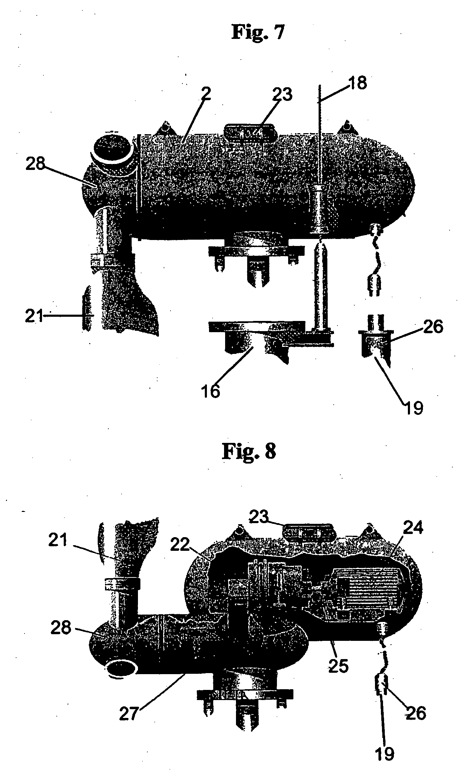

From the figures 6,7 and 8 it is shown a housing (2), a turbine (21) and a gearing (22) for gearing a rotational speed from the turbine, accumulator flasks (23) to protect the capsule against ingress of water by means of over pressure protection of the housing or the capsule, a generator (24) to transform mechanical energy from the gearing or transtransmission (22) to electric energy, and a nacelle with pitch control (28) for twisting of adjusting the pitch of the turbine blades, oil or other corrosion inhibiting fluid (27), alternatively helium or some other inert gas (25), preferably with a good thermal conductivity, with for instance 0,05 MPa (0.5 bar) head pressure compared to the surrounding water pressure (25) and an electric coupler (26) for connecting the generator (24) to the cable (19) for landing the energy on shore.

## Claims

1. An apparatus for the production of energy from currents in a body of water with a surface towards the atmosphere, flowing over a seabed (10), the apparatus comprising an axial turbine (1) with twistable blades, where the turbine (1) is supported in a housing (2), where the housing (2) is secured to a carrying structure (14) founded on the seabed (10) below the flowing body of water, **characterized in that** the apparatus is completely placed below the surface of the body of water;
the blades can be tested at least 180°, preferably at least 220° to allow the turbine (1) to rotate the same direction regardless of the direction of the flow of the body of water and to enable stopping the turbine (1) completely; and
the housing (2) where the turbine (1) is supported forms the fixed point of the apparatus closest to the surface.

2. The apparatus for the production of energy according to claim 1, wherein the circumference of the turbine (1) defines the point of the apparatus closest to the surface.

3. The apparatus for the production of energy according to claim 1, wherein the housing (2) where the turbine (1) is supported is rigidly secured to the carrying structure (14), such that the turbine (1) not can be rotated in relation to the seabed (10).

4. The apparatus for the production of energy according to claim 1, wherein it is assembled of modules, including the housing (2) with the axial turbine (1) and the carrying structure (14) as separate modules.

5. The apparatus for the production of energy according to claim 4, wherein the carrying structure module (14) furthermore comprises a foundation pillar (11), a combined formwork (15) and a reinforcement tube (12), and where the formwork (15) (shown as a cone) may be of materials, including fabric that is given a conical shape if it is filled with concrete.

6. The apparatus for the production of energy according to claim 1, further including a cable gate (17) securing a cable (4) for the transferral of energy to avoid fatigue fractures of the cable (4) due to the forces of the lowing currents, where the cable (4) for the generated power extends from an electric generator (24), through the housing (2) and to a land based plant (5).

## Patentansprüche

1. Vorrichtung zur Erzeugung von Energie aus Strömungen in einem Wasserkörper mit einer Oberfläche zur Atmosphäre hin, welche über einen Meeresgrund (10) strömen, wobei die Vorrichtung eine Axialturbine (1) mit verdrehbaren Schaufeln umfasst, wobei die Turbine (1) in einem Gehäuse (2) gelagert ist, wobei das Gehäuse (2) an einer Tragstruktur (14) befestigt ist, die auf dem Meeresgrund (10) unterhalb des strömenden Wasserkörpers auf Grund gelegt ist, **dadurch gekennzeichnet, dass** die Vorrichtung vollständig unterhalb der Oberfläche des Wasserkörpers angeordnet ist, die Schaufeln wenigstens 180°, vorzugsweise wenigstens 220°, verdreht werden können, um der Turbine (1) zu gestatten, ungeachtet von der Strömungsrichtung des Wasserkörpers in der gleichen Richtung zu drehen, und ein vollständiges Stoppen der Turbine (1) zu ermöglichen; sowie **dadurch**, dass das Gehäuse (2) dort, wo die Turbine (1) gelagert ist, den der Oberfläche nächstgelegenen festgelegten Punkt der Vorrichtung bildet.

2. Vorrichtung zur Erzeugung von Energie nach Anspruch 1, wobei der Umfang der Turbine (1) den der Oberfläche nächstgelegenen Punkt der Vorrichtung definiert.

3. Vorrichtung zur Erzeugung von Energie nach Anspruch 1, wobei das Gehäuse (2) dort, wo die Turbine (1) gelagert ist, starr an der Tragstruktur (14) gesichert ist, sodass die Turbine (1) nicht in Bezug zum Meeresgrund (10) in Drehung versetzt werden kann.

4. Vorrichtung zur Erzeugung von Energie nach Anspruch 1, wobei sie aus Modulen zusammengebaut ist, umfassend das Gehäuse (2) mit der Axialturbine (1) und die Tragstruktur (14) als gesonderte Module.

5. Vorrichtung zur Erzeugung von Energie nach Anspruch 4, wobei das Tragstrukturmodul (14) darüber hinaus eine Fundamentsäule (11), eine kombinierte Verschalung (15) und ein Verstärkungsrohr (12) umfasst, und wobei die Verschalung (15) (als Konus dargestellt) aus Materialien sein kann, einschließlich eines Gewebes, welchen eine konische Gestalt gegeben wird, wenn sie mit Beton gefüllt wird.

6. Vorrichtung zur Erzeugung von Energie nach Anspruch 1, ferner umfassend ein Kabelgatter (17), welches ein Kabel (4) zur Übertragung von Energie sichert, um Ermüdungsbrüche des Kabels (4) aufgrund der Kräfte der Strömungen zu vermeiden, wobei das Kabel (4) für die erzeugte Leistung von einem elektrischen Generator (24) durch das Gehäuse (2) und zu einer landgestützten Anlage (5) verläuft.

## Revendications

1. Appareil pour la production d'énergie à partir de courants dans un corps d'eau avec une surface vers l'atmosphère, s'écoulant sur des fonds marins (10), l'appareil comprenant une turbine axiale (1) possédant des pales pouvant se tordre, la turbine (1) étant supportée dans un logement (2), le logement (2) étant fixé à une structure de support (14) fondée sur les fonds marins (10) sous le corps d'eau en écoulement, **caractérisé en ce que** l'appareil est complètement placé sous la surface du corps d' eau ;
les pales peuvent se tordre d'au moins 180°, de préférence d'au moins 220° pour permettre à la turbine (1) de tourner dans la même direction quelle que soit la direction de l'écoulement du corps d'eau et pour permettre l'arrêt complet de la turbine (1) ; et
le logement (2) où est supportée la turbine (1) forme le point fixe de l'appareil le plus proche de la surface.

2. Appareil pour la production d'énergie selon la revendication 1, dans lequel la circonférence de la turbine (1) définit le point de l'appareil le plus proche de la surface.

3. Appareil pour la production d'énergie selon la revendication 1, dans lequel le logement (2) où est supportée la turbine (1) est fixé de manière rigide à la structure de support (14), de sorte que la turbine (1) ne puisse pas tourner par rapport aux fonds marins (10).

4. Appareil pour la production d'énergie selon la revendication 1, dans lequel il est assemblé sous forme de modules, comprenant le logement (2) avec la turbine axiale (1) et la structure de support (14) en tant que modules distincts.

5. Appareil pour la production d'énergie selon la revendication 4, dans lequel le module de structure de support (14) comprend en outre un pilier de fondation (11), un coffrage (15) et un tube de renforcement (12) combinés, et où le coffrage (15) (illustré sous forme de cône) peut être constitué de matériaux, y compris un tissu auquel on donne une forme conique s'il est rempli de béton.

6. Appareil pour la production d'énergie selon la revendication 1, comprenant en outre une barrière de câble (17) fixant un câble (4) pour le transfert d'énergie afin d'éviter les ruptures par fatigue du câble (4) dues aux forces des courants en écoulement, où le câble (4) pour la puissance générée s'étend depuis un générateur électrique (24), à travers le logement (2) et jusqu'à une installation terrestre (5).
